(19) Europäisches Patentamt European Patent Office Office européen des brevets

(11) **EP 4 679 367 A1**

(12) **EUROPEAN PATENT APPLICATION**
published in accordance with Art. 153(4) EPC

(43) Date of publication:
**14.01.2026 Bulletin 2026/03**

(21) Application number: **24771113.8**

(22) Date of filing: **07.03.2024**

(51) International Patent Classification (IPC):
*G06T 7/62* (2017.01)          *G06V 10/20* (2022.01)
*G06V 10/44* (2022.01)          *G06T 7/11* (2017.01)
*G06T 5/50* (2006.01)          *G06T 7/13* (2017.01)

(52) Cooperative Patent Classification (CPC):
**G06T 5/50; G06T 7/11; G06T 7/13; G06T 7/62;
G06V 10/20; G06V 10/44**

(86) International application number:
**PCT/KR2024/002948**

(87) International publication number:
**WO 2024/191113 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.03.2023  KR 20230031846**

(71) Applicant: **ROEN Surgical, Inc.
Daejeon 34051 (KR)**

(72) Inventors:
  • **SONG, Kyu-Seob
    Daejeon 34051 (KR)**
  • **LEE, Wonjun
    Daejeon 34051 (KR)**

  • **KIM, Jae-chul
    Daejeon 34051 (KR)**
  • **PARK, Byungji
    Daejeon 34051 (KR)**
  • **CHOI, Sungjae
    Daejeon 34051 (KR)**
  • **LEE, Dong-Ho
    Daejeon 34051 (KR)**
  • **SEO, Hyeon-Se
    Daejeon 34051 (KR)**
  • **KWON, Dong-Soo
    Daejeon 34051 (KR)**

(74) Representative: **Stolmár & Partner
Patentanwälte PartG mbB
Blumenstraße 17
80331 München (DE)**

(54) **METHOD FOR ESTIMATING STONE SIZE**

(57)    Proposed is a method for estimating a stone size, which is a method by which a control unit estimates the size of a stone by analyzing an image acquired through a camera (200). The method includes (a) acquiring an object extraction image and an image capable of identifying a three-dimensional shape of a stone in an original stone image acquired through the camera (200) mounted on an end of an endoscope, (b) acquiring a reconstructed image by combining a result acquired in the process (a) with the original stone image, and (c) acquiring a result of the probability of the size of the stone by inputting the reconstructed image into a machine learning model.

[FIG 1]

## Description

## Technical Field

The present disclosure relates to a method for estimating a stone size. More particularly, the present disclosure relates to a method for estimating a stone size by analyzing an image acquired through a camera 200 mounted on an endoscope.

## Background Art

An endoscope is a medical instrument used to directly investigate internal organs or the inside of body cavities. The endoscope is designed to be inserted into the body to observe an organ with a lesion that cannot be directly seen without performing surgery or autopsy. There are many types of endoscopes such as a bronchoscope, an esophagoscope, a gastroscope, a duodenoscope, a proctoscope, a cystoscope, a laparoscope, and a ureteroscope.

Endoscopic surgery using a ureteroscope is known as the most frequently used and reliable method to remove kidney stones. For example, the method is performed in the manner of inserting the ureteroscope through the ureter to reach a kidney using radiodiagnostic equipment, fragmenting stones with a laser, and extracting the stones using a basket. Here, the laser and the basket are inserted through a channel inside the ureteroscope.

Such a conventional kidney stone removal surgery is performed manually, and precise and detailed work is required, so that a long surgery time is required, but fatigue occurs in the doctor's wrist and arm joints. With the development of a robot for the kidney stone removal surgery, a doctor can perform the kidney stone removal surgery by using the robot with a simple operation, so that the doctor's fatigue is reduced and the surgical accuracy is increased.

In the ureteroscopic surgery method using the robot, a method in which the ureteroscope is inserted into the kidney through the urethra, stones are fragmented by using a laser, and the fragmented stones are extracted by using a basket is used. Here, the laser and the basket are inserted into a channel inside the ureteroscope. Although the fatigue of the doctor is significantly reduced by such a robot-based surgical method, the size of the stone cannot be accurately measured with an endoscope alone, so that there is a possibility that a medical accident in which a wound is caused in the urethra of a patient occurs during a process of removing a stone that is not sufficiently fragmented. As such, when the urethra is damaged, a surgery is required to be performed immediately through an incision, and there is a problem that a fatal sequela is left. When radiodiagnostic equipment is used to estimate the size of the stone via the endoscope, there is a risk of exposure to radiation to a doctor and a patient, and there is also a problem that the degree of exposure is more severe for the doctor who performs a surgery several times.

In consideration of such issues, there is a need for a method for estimating a stone size by using an endoscope alone so as to prevent medical accidents.

## Disclosure

## Technical Problem

Accordingly, the present disclosure has been made keeping in mind the above problems occurring in the related art.

An objective of the present disclosure is to provide a method for estimating a stone size by using an endoscope and a basket only.

Another objective of the present disclosure is to provide a method capable of realizing not only an accurate estimation of the stone size during a surgical procedure but also a determination such as whether the stone is capable of being extracted, whether a fragmenting process by using a laser is required, and so on.

The objective that can be obtained from the present disclosure is not limited to the above-mentioned objective, and other objectives not mentioned herein will be clearly understood from the following description.

## Technical Solution

In order to achieve the objectives of the present disclosure, according to an aspect of the present disclosure, there is provided a method for estimating a stone size, the method being performed for estimating the stone size by a control unit analyzing an image acquired through a camera

(200), and the method including: (a) applying an original image of a stone acquired through the camera (200) mounted on an end portion of an endoscope to a monocular disparity estimation model and a stone segmentation model; (b) acquiring a reconstructed image by adding results acquired from the monocular disparity estimation model and the stone segmentation model to the original image of the stone; and (c) acquiring a result for a stone size possibility by inputting the reconstructed image into a machine learning model.

According to the present disclosure, there is provided a method for estimating a stone size, the method being performed for estimating the stone size by a control unit analyzing an image acquired through a camera (200), the method including: (a) acquiring an object extraction image and an image capable of identifying a three-dimensional shape of a stone in an original image of the stone, the original image being acquired through the camera (200) mounted on an end portion of an endoscope; (b) acquiring a reconstructed image on the basis of a result acquired in the process (a); and (c) estimating the stone size on the basis of the reconstructed image.

The process (b) may include at least one process selected from a process of adding the original image to the image capable of identifying the three-dimensional shape and the object extraction image and a process of multiplying the image capable of identifying the three-dimensional shape by the object extraction image on a pixel-by-pixel basis and extracting a three-dimensional shape for pixels corresponding to the stone.

The process (c) may include at least one process selected from a process of acquiring a result on a probability of a stone size on the basis of a machine learning model, a process of calculating a maximum length among pairwise distances between pixels forming a contour in the extracted three-dimensional shape, and a process of overlaying a depth-based heat map onto the original image on the basis of extracted three-dimensional shape information.

After the process (c), estimating the stone size as a specific size when a probability of the specific size is larger than other probabilities of other sizes by at least a threshold in a stone size probability analysis process may be included.

According to another aspect of the present disclosure, there is provided a method for estimating a stone size, the method being performed for estimating the stone size by a control unit analyzing an image acquired through a camera (200), the method including: (a) acquiring an original image of a stone by using the camera (200) mounted on an end portion of an endoscope; (b) holding the stone with a basket of the endoscope; (c) adjusting a distance between the camera (200) and the basket; (d) acquiring an original image containing the stone held with the basket, the original image acquired through the camera (200) mounted on the end portion of the endoscope; (e) acquiring an object extraction image from the original image containing the stone held with the basket or the original image of the stone acquired in the process (a); (f) acquiring a contour of the stone from the acquired object extraction image; and (g) estimating an actual stone size by calculating a length of a major axis from pixels corresponding to the acquired contour.

The method may further include (h) estimating the stone size on the basis of a correlation between the length of the major axis acquired in the process (g) and an adjusted distance value acquired in the process (c).

According to yet another aspect of the present disclosure, there is provided a method for estimating a stone size, the method being performed for estimating the stone size by a control unit analyzing an image acquired through a camera (200), the method including: (a) acquiring an original image of a stone by using the camera (200) mounted on an end portion of an endoscope; (b) holding the stone with a basket of the endoscope; (c) extracting a stone portion image by using a first image acquired at a first position and a second image acquired at a second position, the first position being a position at the time when the stone is held with the basket and the second position being a position after the basket is moved; (d) acquiring a maximum number of pixels corresponding to a maximum major axis length of the stone from the stone portion image acquired from the first image and the second image and then calculating a change rate of the number of pixels; (g) acquiring a change rate of the maximum number of pixels for a distance between the camera (200) and the stone; and (h) calculating an actual stone size on the basis of a value calculated in the process (g).

According to still another aspect of the present disclosure, there is provided a method for estimating a stone size, the method being performed for estimating the stone size by a control unit analyzing an image acquired through a camera (200), the method including: (a) acquiring an original image of a stone by using the camera (200) mounted on an end portion of an endoscope; (b) moving the endoscope in a direction toward the stone or pulling the endoscope in a direction opposite to the stone; (c) acquiring an original image of the stone by using the camera (200) mounted on the end portion of an endoscope after the process (b); (d) acquiring an object extraction image from the original image acquired in the process (a); (e) acquiring an object extraction image from the original image acquired in the process (c); (f) calculating the number of horizontal pixels and the number of vertical pixels of the stone from the results acquired in the process (d) and the process (e); and (g) calculating a distance between the camera (200) and the stone by using values calculated in the process (f).

The process (f) may include rotating a basket holding the stone in the process (d) and the process (e) and then acquiring a stone image, and may include extracting an object having a maximum horizontal length and a maximum vertical length from the acquired stone image.

**Advantageous Effects**

According to aspects of the present disclosure, the stone size is capable of being estimated by using the endoscope and the basket only.

According to aspects of the present disclosure, the stone size is capable of being accurately estimated during a surgical process, and whether the stone is capable of being extracted, whether a fragmenting process by using a laser is required, and so on are capable of being determined.

## Description of Drawings

FIG. 1 is a view illustrating a configuration of a stone removal apparatus according to an embodiment of the present disclosure.

FIG. 2, FIG. 3, FIG. 8, and FIG. 9 are views illustrating a method for estimating a stone size according to an embodiment of the present disclosure.

FIG. 4 is a view illustrating a disparity map according to an embodiment of the present disclosure.

FIG. 5 to 7 are views illustrating image processing results according to an embodiment of the present disclosure.

## Mode for Invention

In the following detailed description, reference is made to the accompanying drawings that show, by way of illustration, specific embodiments in which the present disclosure may be practiced. These embodiments are described in sufficient detail to enable those skilled in the art to practice the present disclosure. It is to be understood that the various embodiments of the present disclosure, although different, are not necessarily mutually exclusive. For example, a particular feature, structure, or characteristic described herein in connection with one embodiment may be implemented within other embodiments without departing from the spirit and scope of the present disclosure. In addition, it is to be understood that the position or arrangement of individual elements within each disclosed embodiment may be modified without departing from the spirit and scope of the present disclosure. Therefore, the following detailed description is not to be taken in a limiting sense, and the scope of the present disclosure is defined only by the appended claims, appropriately interpreted, along with the full range of equivalents to which the claims are entitled. In the drawings, similar reference numerals refer to the same or similar functions over various aspects, and the length, area, thickness, and the like and the form may be exaggerated for convenience.

Hereinafter, preferred embodiments of the present disclosure will be described in detail with reference to the accompanying drawings so that those skilled in the art may easily implement the present disclosure.

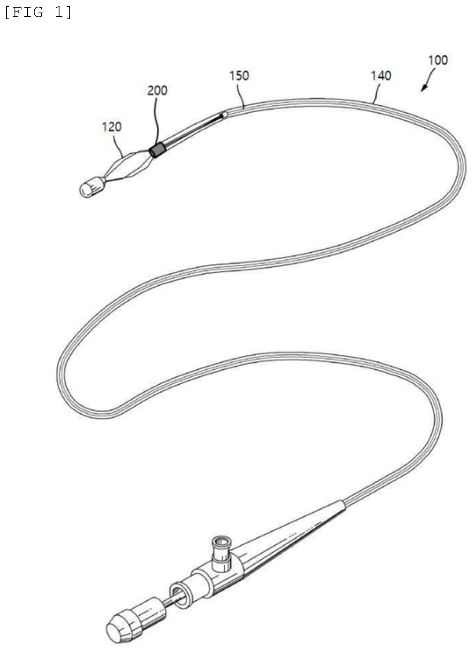

FIG. 1 is a view illustrating a configuration of a stone removal apparatus according to an embodiment of the present disclosure.

Referring to FIG. 1, the stone removal apparatus 100 includes a wire 150 which is disposed in an internal space of a tube 140 and which is formed by twisting a plurality of strands of metal wire.

Each wire 150 extends through a distal end portion of the tube 140, and is formed such that each wire 150 bends outward of the tube 140. In addition, a distal end portion of each wire 150 is fixed to each other so that a basket 120 is formed.

In performing a stone removal procedure, a tip end of the tube 140 is inserted into a position where a stone is positioned, the basket 120 is opened and the stone is captured in the basket 120, the basket 120 is pulled inside the tube 140 such that the stone is held and captured by the basket 120, and then the stone is pulled out, thereby removing the stone.

In addition, according to an embodiment of the present disclosure, a camera 200 is mounted on the distal end portion of the tube 140. The basket 120 may be optionally positioned on an inner side or an outer side of the tube 140. The stone captured by the basket 120 is photographed by the camera 200, and the size of the stone is estimated.

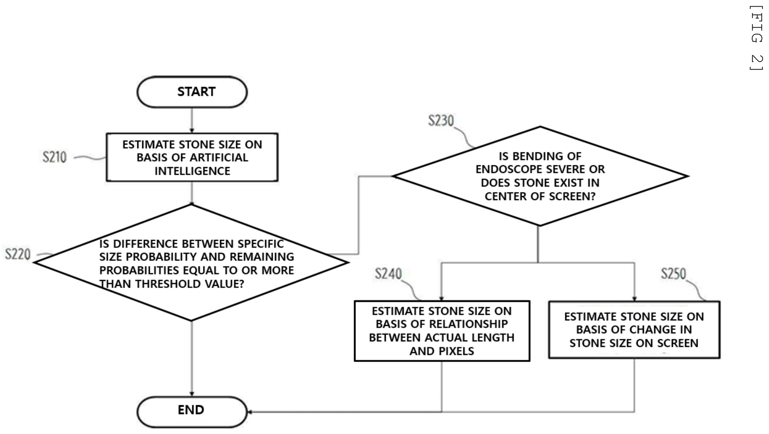

FIG. 2 is a view illustrating a method for estimating the stone size according to an embodiment of the present disclosure.

An image of the stone acquired through the camera 200 described with reference to FIG. 1 is transmitted to a stone size estimation system (not illustrated), and an operation that will be described later is performed by the stone size estimation system.

Referring to FIG. 2, in the method for estimating the stone size according to an embodiment of the present disclosure, a process of estimating the stone size on the basis of artificial intelligence is performed first (S210).

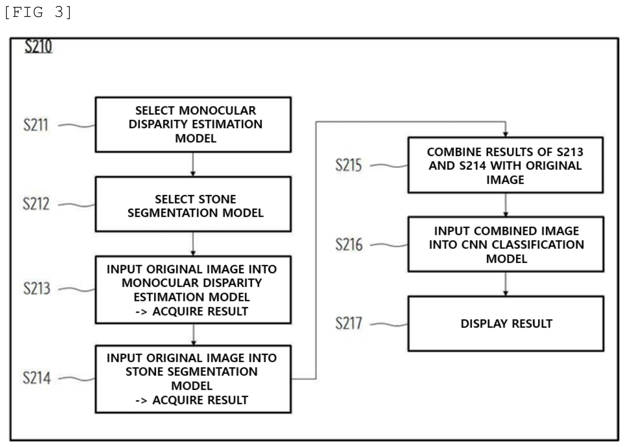

The process S210 may be performed by following a process illustrated in FIG. 3.

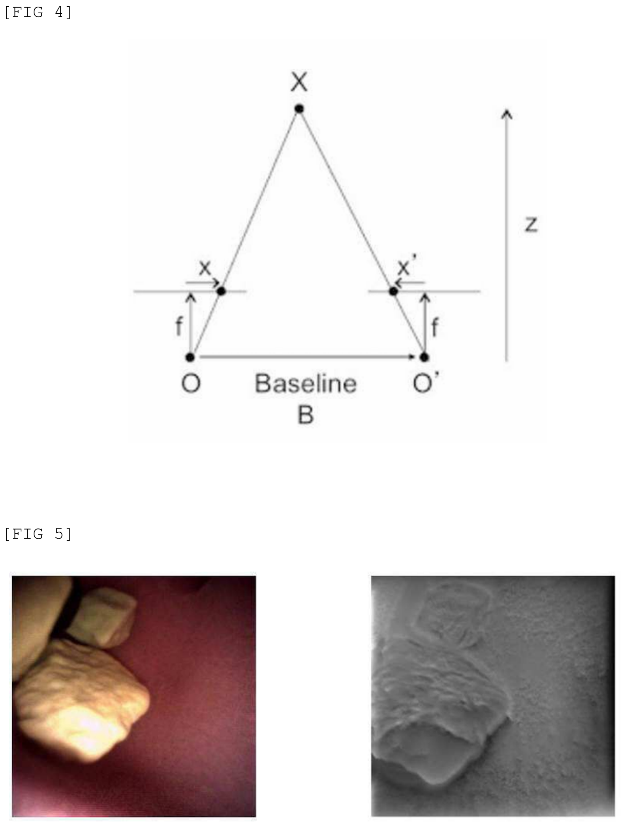

Specifically, first, an appropriate monocular disparity estimation model is selected (S211). Monocular disparity refers to a phenomenon where, when a person observes an object by alternately closing each eye, the object appears to shift toward the side of the open eye. That is, there is a difference in visual information, and the reason that a person has two eyes is to perceive stereoscopic depth. Here, stereoscopic depth is depth information, and the difference in views is disparity. The representation of this disparity in a single-view image is called a disparity map. In FIG. 4, x-x' represents the disparity of point X, and the disparity and the depth Z have a one-to-one mapping relationship when a gap between O and O' is constant. For example, in the stereo camera 200, identical disparity values indicate identical depths.

The reason that disparity map is needed is that stones that seems identical in appearance may have different lengths, so that depth information is required to be checked. That is, it is necessary to acquire a 3D stereoscopic shape of the stone.

In the present specification, the disparity map is illustrated, but any method for extracting a three-dimensional shape may replace the disparity map.

However, in the case of the stone removal device described with reference to FIG. 1, it is difficult to mount a stereo camera as the camera 200. Therefore, the disparity may be measured by using the monocular disparity estimation model such as EndoSLAM. Specifically, an image acquired by the camera 200 disposed in the stone removal apparatus may be assumed to be an image observed by a left lens and an image observed by a right lens may be artificially generated so as to measure the disparity. In the process S211, the monocular disparity model to be used in this manner is selected.

In most cases, training is performed by photographing general surrounding environments rather than photographing internal organs, which is not suitable for internal organs that do not have much texture in images. In addition, image depth information is required for a training dataset. However, in EndoSLAM, a pretrained model exists and depth information for the subsequent training dataset is not required.

Then, an appropriate stone segmentation model is selected (S212). Since an error may occur with the disparity map alone, the stone segmentation model is introduced to compensate for the error. Segmentation is an algorithm capable of extracting a desired object on a pixel-by-pixel basis from an acquired image. In the process S212, a predetermined stone segmentation model may be selected.

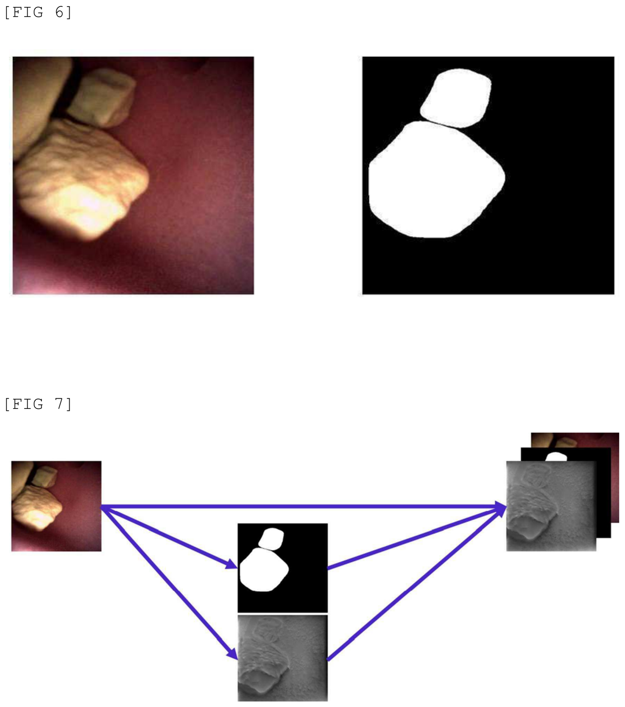

A result is acquired by inputting an original image acquired by the camera 200 of the stone removal apparatus into the monocular disparity estimation model selected in the process S211 (S213). In FIG. 5, the left image is the original image, and the right image is the image acquired through the monocular disparity estimation model. In addition, a result is acquired by inputting the original image into the stone segmentation model selected in the process S212 (S214). In FIG. 6, the left image is the original image, and the right image is the image acquired through the stone segmentation model.

Then, the original image is overlapped with the results obtained in the process S213 and the process S214 (S215). The original image consists of three RGB channels, and the results acquired in the process S213 and the process S214 are black and white images. Therefore, the original image, the image acquired in the process S213, and the image acquired in the process S214 are combined as shown in FIG. 7.

After the combined image is input into a machine learning classification model which is a CNN classification model preferably (S216), a result is displayed on a display unit separately provided (S217).

The result acquired through the process S217 may be a probability distribution for the stone size. For example, result values such as probability P1 for a first size, probability P2 for a second size, and so on may be acquired for stone sizes.

Referring to FIG. 2 again, based on the results acquired in the process S217, whether the probability of a specific size is significantly larger than the probabilities of the remaining sizes is determined (S220). When the probability of the specific size is significantly larger than the probabilities of the remaining sizes, i.e., when there is a difference above a threshold value, the size of the extracted stone may be determined to be the specific size, so that the process of estimating the stone size is ended.

In the stone removal apparatus, if the difference value between the probability of the specific size and at least one of the probabilities of the remaining sizes is less than the threshold value, whether the bending of the tube (140) is severe or whether the stone is located at the center of the displayed screen (S230).

If so, the stone size is estimated by using a relationship between the actual length of the component displayed on the displayed screen and the pixel (S240). If not, the stone size is estimated by using a change in the stone size in the displayed result (S250).

If there are multiple stones acquired through object extraction, a passing probability of a specific stone may be displayed by multiplying an image in which a three-dimensional shape of a stone is identified by each stone object extraction image. That is, individual probabilities may be displayed for each stone.

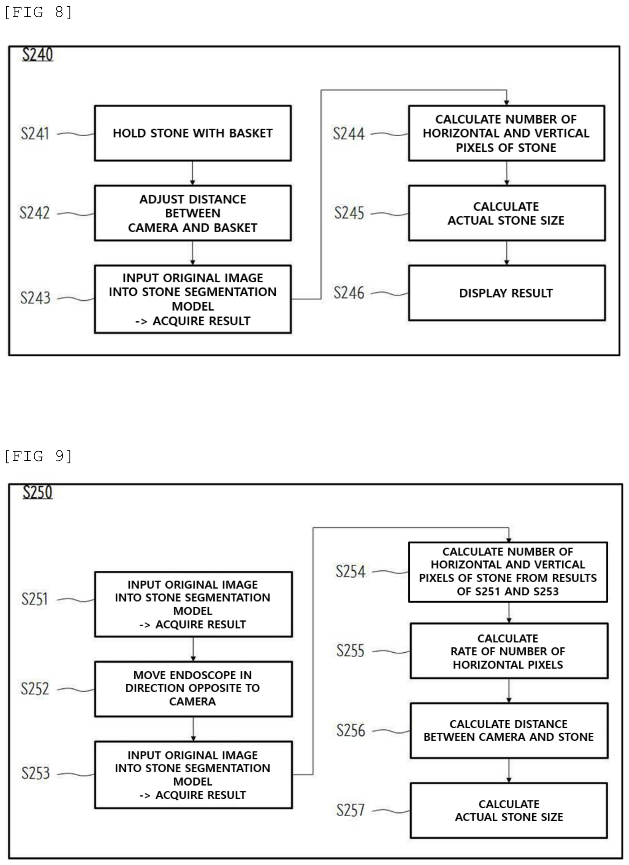

First, in describing the process S240 with reference to FIG. 8, the stone is held with the basket 120 (S241), a distance between the camera 200 and the basket 120 is partially adjusted (S242), and a result is acquired by inputting the original image into the stone segmentation model selected in the process S212 (S243). That is, images are acquired through the camera 200 at a first position and a second position, respectively. The first position is a position at the time when the stone is held with the basket 120 or immediately thereafter, and the second position is a position after the basket 120 is moved.

The number of horizontal and vertical pixels of the stone is calculated from the acquired result (S244). In this process, a process of rotating the basket holding the stone, acquiring a stone image after rotation, and extracting an object having a maximum horizontal and vertical length from the acquired stone image may be included. The rotation angle or the rotation ratio may be flexibly changed according to the performance.

The actual size of the stone is calculated by using the process described above (S245). The calculated result is displayed through the display unit (S246).

For example, when it is confirmed that there is a bending of the tube 140 (when a bending angle is equal to or more than a specific angle) and the stone is not positioned in the center of the screen, the distance between the basket 120 and the camera 200 may be partially adjusted (S242), so that the stones size may be measured on the basis of the stone image acquired from the original position and the stone image acquired from the adjusted position.

Specifically, by using the image of the stone held with the basket 120, a control unit maps the image to an X-Y coordinate unit. In the X-Y coordinate unit, an X coordinate represents a distance between the camera 200 and the stone, and a Y coordinate represents a reciprocal of the maximum pixel number.

Only a stone portion in the image is extracted through image segmentation by using the two images of the stone held with the basket 120 (S243). Then, after the maximum number of pixels in the horizontal and vertical directions of the stone is acquired (S244), the control unit maps the maximum number of pixels to the X-Y coordinate unit.

The reciprocal of the stone size and the distance between the camera 200 and the stone represent a proportional relationship. Therefore, a graph having a proportional relationship may be drawn by using the distance between the camera 200 and the stone and the maximum number of pixels that are acquired from the two images acquired before and after the distance between the basket 120 and the camera 200 is adjusted.

In order to calculate the actual stone size by using the on-screen stone size of the stone photographed by the camera 200, it is necessary to know a distance d1 from the camera 200 to the basket 120 holding the stone and a distance d2 between the camera 200 and the stone after the partial positional adjustment is performed.

After the stone is held with the basket 120, the wires in the tube 140 are pulled backward. At this time, the values d1 and d2 are acquired by measuring a distance between a distance measuring unit and a rear end of the tube 140 by using the distance measuring unit while the wires are no longer pulled.

By using this result and a correlation between the actual stone size at a specific distance d0 and the number of pixels of the stone in the image, the actual stone size may be calculated by the following equation (S245).

Actual stone size = (number of pixels on the image) X (correlation between actual stone size and number of pixels)

Meanwhile, when it is confirmed that the bending does not exist in the tube 140 of the stone removal apparatus (the bending is not severe and the bending angle is less than the specific angle) and the stone is positioned in the center of the screen, the stone size may be measured through the following process.

First, since an end portion of an endoscopic apparatus is bent according to an operation of the endoscopic apparatus, the degree of bending may be checked in an endoscope control unit.

In order to calculate the actual stone size by using the on-screen size of the stone in the stone image photographed by the camera 200, a distance d3 from the camera 200 to the stone is required to be known.

In a state in which the stone is held with the basket 120, the distance between the distance measuring unit and the rear end of the tube may be measured by the distance measuring unit. However, in a state in which the stone is not held, another method for acquiring the distance d3 is required.

Only a stone portion is extracted through image segmentation of the stone image acquired from the original position, and only a stone portion is extracted through image segmentation after an endoscope fixing distance is moved to a direction opposite to an endoscope imaging unit.

In the two results acquired by image segmentation, the maximum number of pixels in the longitudinal direction of the stone and the maximum number of pixels in the transverse direction of the stone are determined, and then the change rate is calculated.

By using the calculated change rate of the number of pixels, the distance d3 between the camera 200 and the stone may be determined, and the actual stone size may be calculated by using the following mathematical equation.

Longitudinal maximum length = (longitudinal pixel length) * (focal length) / d3 Transverse maximum length = (transverse pixel length) * (focal length) / d3

The method for calculating the actual stone size may vary. For example, a contour of the actual stone may have an arbitrary shape, and the longest distance among all pairwise distances between pixels forming the contour may be calculated as the actual size of the stone. The longest distance among the pairwise distances between all pixels forming the contour may be defined as the "maximum major axis length" and the number of pixels corresponding to the maximum major axis length may be defined as the "maximum pixel number".

The actual stone size analyzed in the control unit may be displayed through the display unit and may be notified to a user.

When the actual size of the calculated stone is smaller than an outer diameter of a sheath, the stone may be actively extracted and removed. When the actual size of the calculated stone is larger than the outer diameter of the sheath, the stone is fragmented by using a laser and stones having the size smaller than the outer diameter of the sheath may be held with the basket and may be removed.

Next, in describing the process S250 with reference to FIG. 9, a result is acquired by inputting the original image into the stone segmentation model selected in the process S212 (S251). Then, the tube 140 is moved in a direction opposite to the direction in which the camera 200 is mounted (S252), and the original image is input into the stone segmentation model selected in the process S212 and a result is acquired (S253). In each of the results obtained in the process S251 and the process S253, the number of horizontal and vertical pixels of the stone is calculated (S254), and the ratio of the number of horizontal pixels of the stone in the result acquired in the process S251 and the number of horizontal pixels of the stone in the result acquired in the process S253 is calculated (S255). On the basis of the calculated result, the distance between the camera 200 and the stone may be calculated (S256), and the size of the stone may be calculated on the basis of the distance (S257).

According to an embodiment of the present disclosure, the size of the stone is capable of being estimated by using only the endoscope and the basket.

According to an embodiment of the present disclosure, the stone size may be accurately estimated during a surgical process, and whether the stone is capable of being extracted, whether a fragmenting process by using a laser is required, and so on may be determined.

The above descriptions on the present disclosure are for illustration, and those skilled in the art to which the present disclosure pertains may understand that the descriptions may be easily modified into other specific forms without changing the technical idea or essential features of the present disclosure. Therefore, it should be understood that the embodiments described above are illustrative in all respects and not restrictive. For example, respective constituent elements described as single types can be distributed and implemented and, similarly, constituent elements described to be distributed can also be implemented in a coupled form.

The scope of the present disclosure is indicated by the following claims rather than the above detailed description, and all changes or modifications derived from the meaning and scope of the claims and their equivalents should be interpreted as being included in the scope of the present disclosure.

**Claims**

1.    A method for estimating a stone size, the method being performed for estimating the stone size by a control unit analyzing an image acquired through a camera (200), the method comprising:

(a) acquiring an object extraction image and an image capable of identifying a three-dimensional shape of a stone in an original image of the stone, the original image being acquired through the camera (200) mounted on an end portion of an endoscope;
(b) acquiring a reconstructed image on the basis of a result acquired in the process (a); and
(c) estimating the stone size on the basis of the reconstructed image.

2.    The method of claim 1, wherein the process (b) comprises at least one process selected from a process of adding the original image to the image capable of identifying the three-dimensional shape and the object extraction image and a process of multiplying the image capable of identifying the three-dimensional shape by the object extraction image on a pixel-by-pixel basis and extracting a three-dimensional shape for pixels corresponding to the stone.

3.    The method of claim 2, wherein the process (c) comprises at least one process selected from a process of acquiring a result on a probability of a stone size on the basis of a machine learning model, a process of calculating a maximum length among pairwise distances between pixels forming a contour in the extracted three-dimensional shape, and a process of overlaying a depth-based heat map onto the original image on the basis of extracted three-dimensional shape information.

4.    The method of claim 3, further comprising, after the process (c):
estimating the stone size as a specific size when a probability of the specific size is larger than other probabilities of other sizes by at least a threshold in a stone size probability analysis process.

5.    A method for estimating a stone size, the method being performed for estimating the stone size by a control unit analyzing an image acquired through a camera (200), the method comprising:

(a) acquiring an original image of a stone by using the camera (200) mounted on an end portion of an endoscope;
(b) holding the stone with a basket of the endoscope;
(c) adjusting a distance between the camera (200) and the basket;

(d) acquiring an original image containing the stone held with the basket, the original image acquired through the camera (200) mounted on the end portion of the endoscope;

(e) acquiring an object extraction image from the original image containing the stone held with the basket or the original image of the stone acquired in the process (a);

(f) acquiring a contour of the stone from the acquired object extraction image; and

(g) estimating an actual stone size by calculating a length of a major axis from pixels corresponding to the acquired contour.

6. The method of claim 5, further comprising:

(h) estimating the stone size on the basis of a correlation between the length of the major axis acquired in the process (g) and an adjusted distance value acquired in the process (c).

7. A method for estimating a stone size, the method being performed for estimating the stone size by a control unit analyzing an image acquired through a camera (200), the method comprising:

(a) acquiring an original image of a stone by using the camera (200) mounted on an end portion of an endoscope;

(b) holding the stone with a basket of the endoscope;

(c) extracting a stone portion image by using a first image acquired at a first position and a second image acquired at a second position, the first position being a position at the time when the stone is held with the basket and the second position being a position after the basket is moved;

(d) acquiring a maximum number of pixels corresponding to a maximum major axis length of the stone from the stone portion image acquired from the first image and the second image and then calculating a change rate of the number of pixels;

(g) acquiring a change rate of the maximum number of pixels for a distance between the camera (200) and the stone; and

(h) calculating an actual stone size on the basis of a value calculated in the process (g).

8. A method for estimating a stone size, the method being performed for estimating the stone size by a control unit analyzing an image acquired through a camera (200), the method comprising:

(a) acquiring an original image of a stone by using the camera (200) mounted on an end portion of an endoscope;

(b) moving the endoscope in a direction toward the stone or pulling the endoscope in a direction opposite to the stone;

(c) acquiring an original image of the stone by using the camera (200) mounted on the end portion of an endoscope after the process (b);

(d) acquiring an object extraction image from the original image acquired in the process (a);

(e) acquiring an object extraction image from the original image acquired in the process (c);

(f) calculating the number of horizontal pixels and the number of vertical pixels of the stone from the results acquired in the process (d) and the process (e); and

(g) calculating a distance between the camera (200) and the stone by using values calculated in the process (f).

9. The method of claim 8, wherein the process (f) comprises:

rotating a basket holding the stone in the process (d) and the process (e) and then acquiring a stone image; and

extracting an object having a maximum horizontal length and a maximum vertical length from the acquired stone image.

[FIG 1]

[FIG 2]

[FIG 3]

[FIG 4]

[FIG 5]

**EP 4 679 367 A1**
[FIG 6]

[FIG 7]

[FIG 8]

**S240**

| | |
|---|---|
| S241 — HOLD STONE WITH BASKET | S244 — CALCULATE NUMBER OF HORIZONTAL AND VERTICAL PIXELS OF STONE |
| S242 — ADJUST DISTANCE BETWEEN CAMERA AND BASKET | S245 — CALCULATE ACTUAL STONE SIZE |
| S243 — INPUT ORIGINAL IMAGE INTO STONE SEGMENTATION MODEL -> ACQUIRE RESULT | S246 — DISPLAY RESULT |

[FIG 9]

**S250**

| | |
|---|---|
| S251 — INPUT ORIGINAL IMAGE INTO STONE SEGMENTATION MODEL -> ACQUIRE RESULT | S254 — CALCULATE NUMBER OF HORIZONTAL AND VERTICAL PIXELS OF STONE FROM RESULTS OF S251 AND S253 |
| S252 — MOVE ENDOSCOPE IN DIRECTION OPPOSITE TO CAMERA | S255 — CALCULATE RATE OF NUMBER OF HORIZONTAL PIXELS |
| S253 — INPUT ORIGINAL IMAGE INTO STONE SEGMENTATION MODEL -> ACQUIRE RESULT | S256 — CALCULATE DISTANCE BETWEEN CAMERA AND STONE |
| | S257 — CALCULATE ACTUAL STONE SIZE |

## INTERNATIONAL SEARCH REPORT

| International application No. |
|---|
| **PCT/KR2024/002948** |

### A. CLASSIFICATION OF SUBJECT MATTER

**G06T 7/62**(2017.01)i; **G06V 10/20**(2022.01)i; **G06V 10/44**(2022.01)i; **G06T 7/11**(2017.01)i; **G06T 5/50**(2006.01)i; **G06T 7/13**(2017.01)i

According to International Patent Classification (IPC) or to both national classification and IPC

### B. FIELDS SEARCHED

Minimum documentation searched (classification system followed by classification symbols)

G06T 7/62(2017.01); A61B 1/00(2006.01); A61B 1/307(2006.01); A61B 17/22(2006.01); A61B 17/225(2006.01); A61B 18/26(2006.01); A61B 90/00(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 카메라(camera), 결석(calculus), 내시경(endoscope), 크기(size), 추정(estimation), 머신러닝(machine learning), 확률(probability), 윤곽선(outline), 거리(distance), 깊이(depth), 길이(length), 픽셀(pixel), 바스켓(basket)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0082618 A (INDUSTRY ACADEMIC COOPERATION FOUNDATION KEIMYUNG UNIVERSITY) 06 July 2021 (2021-07-06)<br>See paragraphs [0016] and [0047]-[0048]; and claims 1, 4-5 and 7. | 1-2 |
| Y | | 3-9 |
| Y | KR 10-2021-0066560 A (EASYENDO SURGICAL, INC.) 07 June 2021 (2021-06-07)<br>See claims 4 and 10-11. | 3-9 |
| A | US 2016-0051125 A1 (GYRUS ACMI, INC. (D.B.A. OLYMPUS SURGICAL TECHNOLOGIES AMERICA)) 25 February 2016 (2016-02-25)<br>See claims 1-9. | 1-9 |
| A | US 2021-0378745 A1 (OLYMPUS CORPORATION) 09 December 2021 (2021-12-09)<br>See claims 1-19. | 1-9 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 June 2024** | **01 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/002948**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2009-0074887 A (INHA UNIVERSITY RESEARCH AND BUSINESS FOUNDATION) 08 July 2009 (2009-07-08)<br>See claims 1-5. | 1-9 |

Form PCT/ISA/210 (second sheet) (July 2022)

# EP 4 679 367 A1

**INTERNATIONAL SEARCH REPORT**
Information on patent family members

International application No.

**PCT/KR2024/002948**

| Patent document cited in search report | | | Publication date (day/month/year) | Patent family member(s) | | | Publication date (day/month/year) |
|---|---|---|---|---|---|---|---|
| KR | 10-2021-0082618 | A | 06 July 2021 | KR | 10-2020-0080124 | A | 06 July 2020 |
| | | | | WO | 2020-138946 | A1 | 02 July 2020 |
| KR | 10-2021-0066560 | A | 07 June 2021 | WO | 2021-107748 | A2 | 03 June 2021 |
| US | 2016-0051125 | A1 | 25 February 2016 | EP | 3139844 | A1 | 15 March 2017 |
| | | | | JP | 2017-515561 | A | 15 June 2017 |
| | | | | US | 2015-0313444 | A1 | 05 November 2015 |
| | | | | WO | 2015-171289 | A1 | 12 November 2015 |
| US | 2021-0378745 | A1 | 09 December 2021 | US | 11903643 | B2 | 20 February 2024 |
| | | | | WO | 2020-174686 | A1 | 03 September 2020 |
| KR | 10-2009-0074887 | A | 08 July 2009 | | None | | |

Form PCT/ISA/210 (patent family annex) (July 2022)